Europäisches Patentamt

European Patent Office

Office européen des brevets

(11) Veröffentlichungsnummer: **0 309 859 B1**

# EUROPÄISCHE PATENTSCHRIFT

(45) Veröffentlichungstag der Patentschrift: **26.08.92**

(21) Anmeldenummer: **88115365.4**

(22) Anmeldetag: **20.09.88**

(51) Int. Cl.⁵: **H04N 9/79**

(54) **Verfahren zur Farbaufzeichnung mit einem Videorecorder.**

(30) Priorität: **29.09.87 DE 3732734**

(43) Veröffentlichungstag der Anmeldung:
**05.04.89 Patentblatt 89/14**

(45) Bekanntmachung des Hinweises auf die
Patenterteilung:
**26.08.92 Patentblatt 92/35**

(84) Benannte Vertragsstaaten:
**AT BE CH DE ES FR GB GR IT LI LU NL SE**

(56) Entgegenhaltungen:
**EP-A- 0 232 627**
**DE-A- 1 512 299**
**DE-B- 1 282 061**
**US-A- 3 764 739**

(73) Patentinhaber: **Deutsche Thomson-Brandt GmbH**
**Hermann-Schwer-Strasse 3 Postfach 1307**
**W-7730 Villingen-Schwenningen(DE)**

(72) Erfinder: **Kluth, Hans-Jürgen**
**Weichselstrasse 11**
**W-7730 VS-Villingen(DE)**

**Beschreibung**

Bei einem Videorecorder wird das Leuchtdichtesignal durch Frequenzmodulation eines Bildträgers aufgezeichnet, der z.B. einen Frequenzbereich von 1,3 - 6 MHz einnimmt. Der modulierte Farbträger wird bei der Aufnahme mit einer Mischträger in einen in der Frequenz heruntergesetzten, modifizierten Farbträger mit einer Frequenz von etwa 627 kHz umgewandelt und in dem freien Frequenzbereich unterhalb des Frequenzspektrums des modulierten Bildträgers aufgezeichnet. Da dieser freie Frequenzbereich etwa 1 MHz beträgt, ergibt sich bei einer Zweiseitenband-Quadraturmodulation für die aufgezeichneten Farbsignale eine maximale Bandbreite von etwa 0,5 MHz.

Es ist ein verbessertes VHS-System bekannt (Super-VHS oder S-VHS), bei dem mit Magnetbändern mit verfeinerter Magnetschicht und größerem Magnetisierungsstrom für den Bildträger ein erhöhter Frequenzmodulationsbereich von 5,4 - 7,0 MHz und eine größere Gesamtbandbreite des Spektrums erreicht werden. Durch dieses System werden die Bandbreite des aufgezeichneten Leuchtdichtesignals Y von bisher etwa 3 MHz auf 5 MHz und dadurch die Wiedergabeschärfe und der Störabstand vergrößert.

Die Bandbreite der aufgezeichneten Farbsignale bleibt dabei unverändert, weil für die Aufzeichnung des Farbträgers aus Gründen der Kompatibilität nach wie vor nur der freie Frequenzbereich von etwa 0 - 1,0 MHz unterhalb des Frequenzspektrums des frequenzmodulierten Bildträgers zur Verfügung steht. Das hat den Nachteil, daß die Schärfe und der Störabstand für die Farbsignale, also für die Wiedergabe farbiger Bildteile, zu wünschen übrig lassen.

Der Erfindung liegt die Aufgabe zugrunde, die Bandbreite der Farbsignale und damit die Qualität der Farbwiedergabe bei einem derartigen Recorder zu verbessern, ohne daß der verfügbare Frequenzbereich unterhalb des Frequenzspektrums des modulierten Bildträgers vergrößert werden muß, und dabei das Übersprechen aus benachbarten Spuren zu verringern.

Diese Aufgabe wird durch die im Anspruch 1 beschriebene Erfindung gelöst. Vorteilhafte Weiterbildungen der Erfindung sind in den Unteransprüchen beschrieben.

Es ist auch Videorecorder bekannt (DE-A-1 512 299), bei dem unterhalb des Frequenzspektrums des mit dem Leuchtdichtesignal modulierten Bildträgers ein zeilensequentiell mit zwei Farbdifferenzsignalen modulierter Farbträger nach dem Restseitenbandverfahren aufgezeichnet wird. Das Übersprechen von Signalen aus benachbarten Spuren bei der Wiedergabe wird dort jedoch nicht behandelt. Eine Verschiebung der räumlichen Lage der Signale auf den Schrägspuren des Magnetbandes zur Verringerung des Übersprechens und eine entsprechende rückläufige Verschiebung bei der Wiedergabe ist dort ebenfalls nicht vorgesehen.

Die Erfindung beruht auf folgenden Erkenntnissen und Überlegungen. Durch die Anwendung des Einseitenbandverfahrens kann der begrenzte freie Frequenzbereich von etwa 1,0 MHz unterhalb des Frequenzspektrums des modulierten Bildträgers voll für die Bandbreite der aufgezeichneten Farbsignale ausgenutzt werden. Diese Bandbreite beträgt dann nicht mehr die Hälfte der Breite des Frequenzbereiches, also 0,5 MHz, sondern ist etwa gleich der gesamten Breite des freien Frequenzbereiches, also 1,0 MHz. Das Einseitenbandverfahren, also die Aufzeichnung ohne das obere Seitenband und ohne den Farbträger, bringt bekanntlich bei Anwendung der Quadraturmodulation beträchtliche Einseitenbandfehler in Form von Übersprechen und Bildstörungen bei Farbübergängen. Deshalb wird im Einseitenbandverfahren jeweils nur eines der beiden Farbsignale oder Farbdifferenzsignale aufgezeichnet, so daß ein Übersprechen zwischen den beiden Farbsignalen ausgeschlossen ist. Bei einigen bestehenden Übertragungsverfahren wie z.B. SECAM und D2-MAC erfolgt ohnehin eine zeilensequentielle Übertragung der beiden Farbdifferenzsignale, so daß dort die Erfindung keinen Nachteil mit sich bringt. Beim PAL-Farbfernsehsignal werden beide Farbdifferenzsignale simultan übertragen, so daß die sequentielle Aufzeichnung, also die Unterdrückung jeweils eines Farbdifferenzsignals in jeder Zeile, einen Signalverlust von 50 % und eine entsprechende Verringerung der Vertikalauflösung bewirkt. Da für die Farbsignale die Vertikalauflösung ohnehin größer ist als die durch die begrenzt Bandbreite vorgegebene Horizontalauflösung, entsteht durch die sequentielle Aufzeichnung kein sichtbarer Nachteil. Außerdem können bei einer Weiterbildung der Erfindung die bisher im Recorder im Weg des Farbträgers liegenden, zur Verringerung des Übersprechens dienenden Kammfilter entfallen, die ebenfalls eine Mittelung über mehrere Zeilen und damit ein Verringerung der Vertikalauflösung bewirken. Die Verdoppelung der Bandbreite der aufgezeichneten Farbsignale bewirkt eine Erhöhung der Bildschärfe für farbige Wiedergabe, ohne daß der Übergang auf eine sequentielle Aufteilung der Farbsignale nennenswerte Nachteile bei der Vertikalauflösung mit sich bringt.

Ein weiterer Vorteil besteht darin, daß durch die sequentielle Aufzeichnung der beiden Farbsignale das Übersprechen zwischen den Farbsignalen beseitigt wird. Für die erfindungsgemäße Farbaufzeichnung sind die heute in üblichen Recordern vorhandenen Schaltungen weitestgehend verwendbar, da das Einseitenbandsignal ähnlich wie ein quadraturmodulierter Farbträger hinsichtlich Modulation und Frequenzumsetzung verarbeitet werden kann. Für die Anpassung bekannter Schaltungen an die erfindungsgemäße Aufzeichnung ist es lediglich notwendig, die Frequenz eines oder mehrerer Mischoszillatoren zu ändern. Die erfindungsgemäße Lösung ist mit der bisherigen Farbaufzeichnung auch kompatibel, weil das Einseitenbandsignal in demselben freien Frequenzbereich aufgezeichnet werden kann wie bislang der quadraturmodulierte, in der Frequenz herabgesetzte Farbträger. Der für die Farbaufzeichnung benötigte Frequenzbereich innerhalb der gesamten Aufzeichnungsbandbreite des Recorders wird also nicht vergrößert. Dieser Frequenzbereich wird lediglich für die Aufzeichnung der Farbsignale im Sinne einer höheren Farbbandbreite besser genutzt.

Bei der Erfindung wird durch eine modifizierte Aufzeichnung zusätzlich erreicht, daß bei der Wiedergabe das Übersprechen zwischen den Farbsignalen so gering ist, daß bisher benötigte Schaltungsmittel zur Beseitigung des Übersprechens entfallen können. Diese Schaltungsmittel bestanden bisher in einem Kammfilter mit einer Verzögerungsleitung für zwei Zeilen, in dem die Farbträger aus zwei Zeilen addiert wurden, um dadurch die Signalamplitude zu verdoppeln und das Übersprechen zu beseitigen. Auch diese Maßnahme beruht darauf, daß in jeder Zeile jeweils nur eines der beiden Farbsignale aufgezeichnet wird.

Bei der Wiedergabe werden zwangsläufig beim Lesen einer Spur auch die beiden benachbarten Spuren durch Übersprechen gelesen, weil die Breite der Köpfe größer ist als die Breite der Spuren und die für den Bildträger wirksamen Azimutverluste im Bereich unterhalb 2 MHz nicht mehr wirksam sind. Deshalb ist es erforderlich, bei der Wiedergabe Mittel zur Beseitigung des Übersprechens für die Farbsignale vorzusehen. Hierfür gibt es grundsätzlich zwei Lösungen.

Bei der ersten Lösung werden die abgetasteten farbträgerfrequenten Signale so behandelt wie der quadraturmodulierte Farbträger in einem bekannten Videorecorder. Der Farbträger gelangt dabei über ein Kammfilter mit einer Verzögerung von zwei Zeilen. Diese Lösung ist bei dem erfindungsgemäßen Videorecorder ebenfalls anwendbar. Die farbträgerfrequenten Signale werden dann so behandelt wie ein quadraturmodulierter Farbträger. Diese Lösung hat den Vorteil, daß in bekannten Videorecordern bereits vorhandene Schaltungen weitestgehend verwendet werden können. Ein Nachteil besteht darin, daß durch das Kammfilter eine Mittlung über mehrere Zeilen und damit eine Verringerung der Vertikalauflösung auftritt.

Eine zweite Lösung für die Beseitigung des Übersprechens besteht in folgendem: Die Lage der Signale auf dem Magnetband innerhalb der Schrägspuren wird gegenüber der bekannten und im VHS-System genormten Lage geändert. Es hat sich gezeigt, daß durch eine bestimmte Verschiebung der Lage, erreicht durch eine entsprechende Signalverzögerung vor der Aufzeichnung, bei der sequentiellen Aufzeichnung eine Konstellation gefunden werden kann, bei das Übersprechen aus benachbarten Zeilen beträchtlich verringert wird. Diese Signalverzögerung und Änderung der Lage der Signale auf dem Band erfolgt insbesondere in zwei Schritten.

In einem ersten Schritt werden die Signale bei der Aufnahme derart verschoben, daß im wiedergegebenen Bild eine "Symmetrie im Übersprechen "auftritt. Das bedeutet, daß beim Lesen einer Spur die dabei gleichzeitig gelesenen beiden benachbarten Spuren in der Ordnung auf dem Bildschirm von der gelesenen Spur etwa den gleichen räumlichen Abstand aufweisen. Es hat sich gezeigt, daß durch dieses "Umsortieren" der Signale der Schrägspuren und die dadurch erreichte Symmetrie im Übersprechen die Auswirkung des Übersprechens im Bild verringert erden kann.

In einem zweiten Schritt werden die Signale zusätzlich so verschoben, daß in nebeneinanderliegenden Spurabschnitten stets gleichartige Farbsignale, also nur U oder V, aufgezeichnet sind. Das Übersprechen bleibt dann in vorteilhafter Weise nur innerhalb des einen Farbsignals, während das andere Farbsignal wegen seines Fehlens in den benachbarten Spurabschnitten am Übersprechen nicht beteiligt sein kann. Da außerdem die benachbarten Spurabschnitte etwa räumlich gleichen Stellen wie die abgetaste Spur entsprechen, entsteht durch das Übersprechen keine nennenswerte Störung im Bild.

Die Erfindung wird in folgenden anhand der Zeichnung erläutert. Darin zeigen

**Fig. 1**    die Aufzeichnung an einem Frequenzdiagramm,

**Fig. 2**    ein vereinfachtes Blockschaltbild für die Aufzeichnung,

**Fig. 3**    die Lage der Signale auf dem Magnetband bei einer bekannten Aufzeichnung,

**Fig. 4**    eine modifizierte Lage der Signale gemäß Fig. 3,

**Fig. 5**    eine weitere Abänderung der Signallage gemäß Fig. 4,

**Fig. 6**    ein Blockschaltbild für die Signalverschiebung bei der Aufnahme gemäß Fig. 4,

**Fig. 7**    ein Blockschaltbild für die Signalverzögerung gemäß Fig. 5,

**Fig. 8**    ein Blockschaltbild für die Wiedergabe zur Umwandlung der sequentiellen Farbsignale in simultane Farbsignale und

In den Figuren und der Beschreibung haben die verwendeten Symbole folgenden Bedeutungen:

| | |
|---|---|
| **A** | ungeradzahlige Halbbilder HB |
| **B** | geradzahlige Halbbilder HB |
| **Av, Bv** | um eine Zeile verzögertes Halbbild A, B |
| **A2v, B2v** | um zwei Zeilen verzögertes Halbbild A, B |
| **BT** | mit dem Leuchtdichtesignal Y frequenzmodulierter Bildträger |
| **ESB** | Einseitenband-Spektrum für Fu, Fv |
| **F** | quadraturmodulierter PAL-Farbträger |
| **Fu, Fv** | farbträgerfrequentes Einseitenbandsignal, AM-moduliert mit U oder V |
| **Fvor** | zeitliche Vorverlegung der Farbsignale |
| **fH** | Zeilenfrequenz |
| **H** | Dauer einer Fernsehzeile, 64 $\mu$s |
| **HB** | Halbbild im Zeilensprung, 50 Hz, Dauer 20 ms |
| **T1, T2** | mit 2 Tonsignalen frequenzmodulierte HiFi-Tonträger |
| **U, V** | videofrequente Farbsignale, stehen insbesondere für Farbdifferenzsignale (B-Y) und R-Y) |
| **VSp** | Verzögerung der Signale einer Schrägspur, d.h. eines Halbbildes HB |

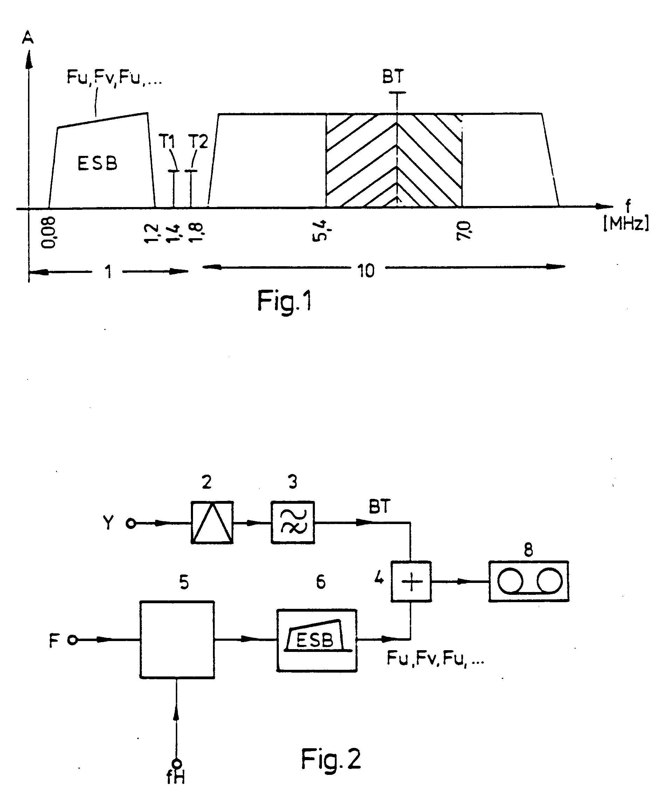

In Fig. 1 wird das Leutdichtesignal Y durch Frequenzmodulation eines Bildträgers BT aufgezeichnet. Die Frequenzmodulation erstreckt sich von 5,4 MHz für den Signalwert Schwarz bis 7,0 MHz für den Signalwert Weiß. Dadurch ergibt sich für den modulierten Bildträger BT ein Gesamtspektrum von etwa 2,0 MHz - 9,0 MHz. Unterhalb des Frequenzspektrums 10 des Bildträgers BT ergibt sich ein freier Frequenzbereich 1 von etwa 0 - 1,2 MHz. Bei 1,4 MHz und 1,8 MHz werden zwei Tonträger T1, T2 aufgezeichnet, die für Stereobetrieb oder Zweisprachenbetrieb mit NF-Tonsignalen moduliert sind. Im Bereich von 0,08 MHz - 1,2 MHz wird das Einseitenbandsignal ESB aufgezeichnet, das von Zeile zur Zeile abwechselnd die farbträgerfrequenten Signale Fu, Fv darstellt. Diese Signale werden durch Modulation der Farbsignale U, V auf einen Farbträger und anschließende Unterdrückung des oberen Seitenbandes und des Farbträgers erzeugt. Jeweils in einer Zeile ist also nur eines der beiden Farbsignale U, V aufgezeichnet.

Für die Trägerrückgewinnung und eine einwandfreie Demodulation bei der Wiedergabe wird zusätzlich während der horizontalen Austastzeit ein Farbsynchronsignal aufgezeichnet, mit dem bei der Wiedergabe der bei der Aufzeichnung unterdrückte Farbträger wieder hergestellt und eine Regelung der Amplitude der Farbsignale (ACC) durchgeführt werden kann.

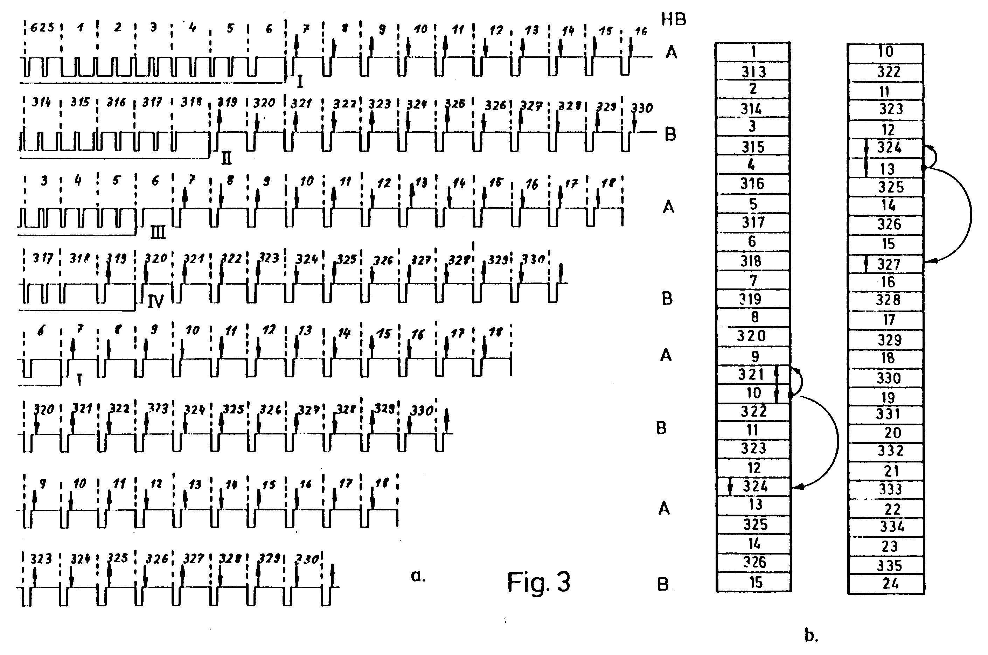

In Fig. 2 wird das Leutdichtesignal Y in dem FM-Modulator 2 dem Bildträger BT aufmoduliert, der über den Hochpaß 3 mit einer Grenzfrequenz von etwa 2,0 MHz auf die Addierstufe 4 gelangt. Der Farbträger F und eine zeilenfrequente Spannung fH werden dem Prozessor 5 zugeführt. In dem Prozessor 5 wird der quadraturmodulierte Farbträger in das farbträgerfrequente Signal Fu, Fv umgewandelt und außerdem in der Frequenz so umgesetzt, daß es den in Fig. 1 gezeigten Frequenzbereich 1 einnimmt. Die Umwandlung kann erfolgen durch eine Demodulation und eine sequentielle Neumodulation auf einen Träger. Es ist auch möglich, den quadraturmodulierten Farbträger F entsprechend dem gewünschten Signal, U, V zu bestimmten Zeitpunkten synchron abzutasten und aus den durch Abtastung gewonnenen Impulsen unmittelbar die mit U, V amplitudenmodulierten Signale Fu, Fv zu gewinnen. Das so gewonnene Einseitenbandsignal ESB gelangt über den Bandpaß 6 mit der Durchlaßkurve ESB gemäß Fig. 1 auf die Addierstufe 4. Das Summensignal am Ausgang der Addierstufe 4, bestehend aus dem mit Y frequenzmodulierten Bildträger BT, den sequentiellen farbträgerfrequenten Signalen Fu, Fv und den Tonträgern T1, T2, wird auf dem Recorder 8 aufgezeichnet. Die aufgezeichneten Farbsignale U, V haben dabei eine Bandbreite, die etwa gleich der verfügabren Bandbreite des Frequenzbereiches 1 in Fig. 1, also 1,0 MHz ist. Die Zeilenfrequenz fH dient im wesentlichen dazu, für die Signalumsetzung im Prozessor 5 Mischträger zu erzeugen, die mit der Zeilenfrequenz korreliert sind und insbesondere ein ganzzahliges Vielfaches der Zeilenfrequenz aufweisen.

Fig. 3a zeigt das Spurmuster auf dem Magnetband, wie es bei bekannten Videorecordern nach der VHS-Norm vorliegt. Die Verschiebung von 1,5 Zeilen von Halbbild zu Halbbild und 3 Zeilen von Bild zu Bild, also z.B. die Lage der Zeilen mit den Nr. 1, 315, 4, 318, 7, 321, 10, 324 nebeneinander, ist dadurch bedingt, daß bei der VHS-Norm, jeweils zwei aufeinanderfolgende Schrägspuren um 1,5 Zeilen gegeneinander räumlich verschoben sind. Die Pfeile innerhalb einer Zeile deuten die beiden verschiedenen aufgezeichneten Farbsignale an, also z.B. der nach oben gerichtete Pfeil das Signal U oder B-Y und der nach unten gerichtete Pfeil z.B. V oder R-Y. Fig. 3b zeigt die Lage der Zeilen mit den aus Fig. 3a ersichtlichen Nummern auf dem Bildschirm bei der Wiedergabe, wie sie durch das Zeilensprungsystem vorgeschrieben ist. Beim Lesen einer Spur werden zwangsläufig auch die beiden Nachbarspuren gelesen, so daß ein Übersprechen auftritt. In Fig. 3b ist für zwei Beispiele dieses Übersprechen angedeutet. Der Punkt bei einer Zeile deutet die gerade gelesene Zeile an. Die Halbkreise sind mit ihren Pfeilen auf die Zeilen gerichtet, die beim Lesen der Zeile durch Übersprechen ebenfalls gelesen werden. Diese Zuordnung ergibt sich aus der Ordnung der Zeilen gemäß Fig. 3a. Es ist ersichtlich, daß z.B. beim Lesen der Zeile Nr. 10 auch die die Zeilen Nr. 321 und 324 gelesen werden. Diese Zeilen haben von der gelesenen Zeile Nr. 10 einen stark unterschiedlichen Abstand in der Ordnung auf dem Bildschirm, was für das Übersprechen nachteilig ist.

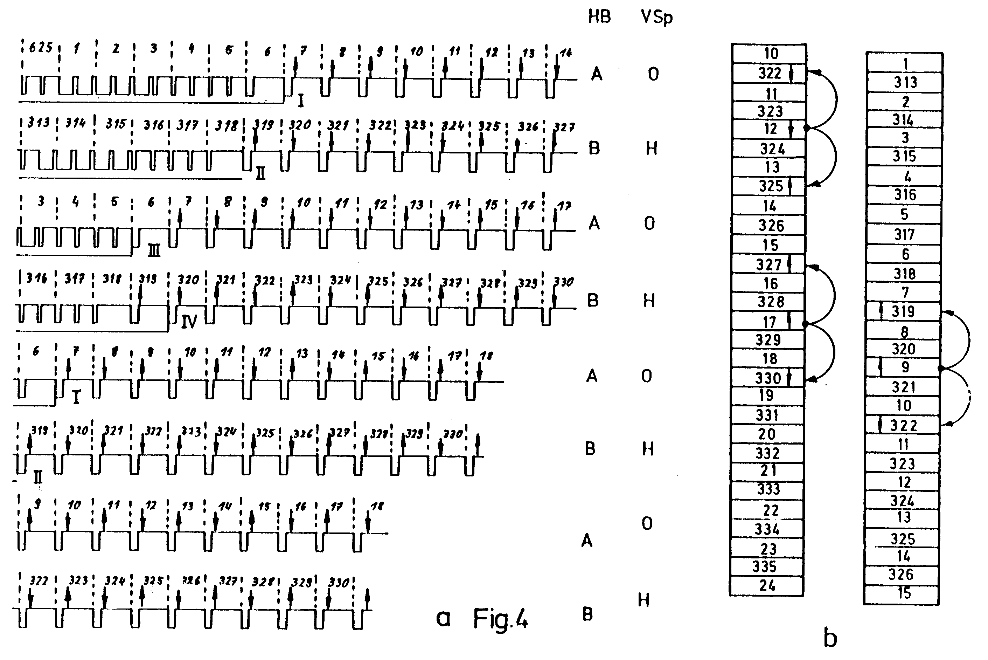

Fig. 4 zeigt, wie das unsymmetrische Übersprechen gemäß Fig. 3b durch eine Verschiebung der Signale auf dem Band verringert werden kann. Gegenüber Fig. 3a wird das Signal jeweils während der geradzahligen Halbbilder B um den Betrag VSp = H, d.h. um die Dauer einer Zeile verzögert. Dann liegt z.B. neben der Zeile mit der Nr. 4 nicht mehr die Zeile 318, sondern 317. Fig. 4b zeigt in Analogie zu Fig. 3b das Übersprechen für verschiedene Zeilen, wie es sich aus dem Schema nach Fig. 4a ergibt. Es ist ersichtlich, daß gegenüber Fig. 3b eine Symmetrie in das Übersprechen eingeführt wird. Das bedeutet, daß die beim Lesen einer Zeile gleichzeitig durch Übersprechen gelesenen benachbarten Zeilen in der Ordnung im Bild von der gelesenen Zeile etwa den gleichen Abstand haben, in Fig. 4b in allen dargestellten Fällen einen gleichmäßigen Abstand von 3 Zeilen. In Fig. 4b enthalten dabei jeweils die drei durch Übersprechen gleichzeitig gelesenen Zeilen, also z.B. Nr. 12, 322, 325 in Fig. 4b oben links, unterschiedliche Farbsignale, wie durch die entgegengesetzt gerichteten Pfeile angedeutet ist. Das Übersprechen wäre dann in unerwünschter Weise zwischen verschiedenartigen Farbsignalen wirksam.

Der Signalaufbau gemäß Fig. 4 gilt für ein D2-MAC Fernsehsignal. Bei diesem Signal werden die beiden Farbsignale zeilensequentiell übertragen, wobei jeweils jedes volle Bild mit demselben Farbsignal beginnt. Dann hat eine Zeile einer bestimmten Ordnungszahl 1 - 625 in einem Vollbild immer das gleiche Farbsignal, in Fig. 4a z.B. die Zeile 7 immer das durch den nach oben gerichteten Pfeil angedeutete Farbsignal. Diese Rückstellung der Farbsequenz auf dasselbe Farbsignal zu Beginn jedes Bildes wird auch als Vollbild-Reset bezeichnet.

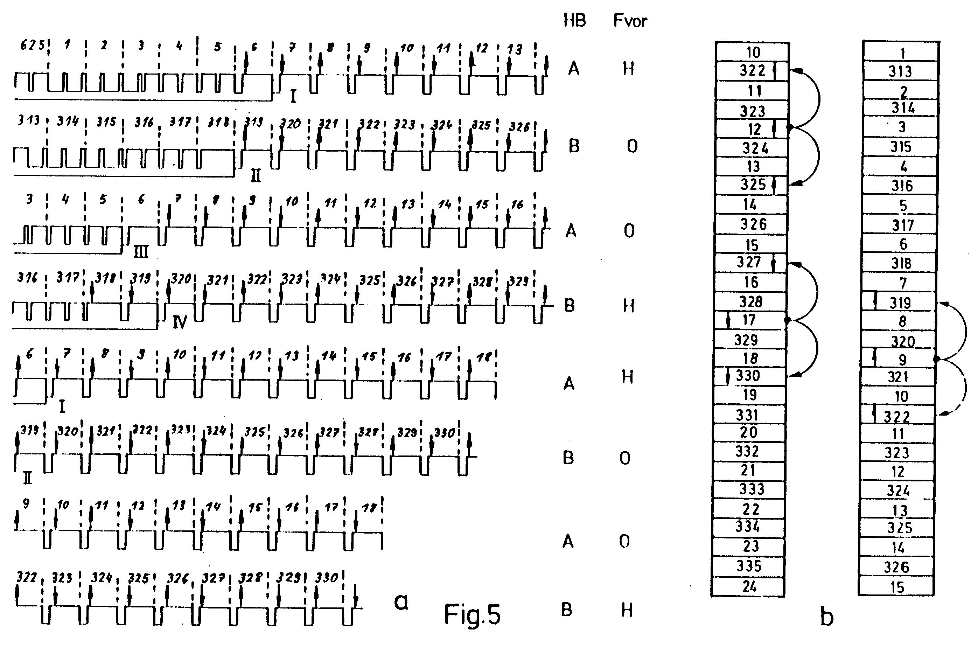

Fig. 5 zeigt eine weitere Änderung der aufgezeichneten Signale, bei der zusätzlich zu dem symmetrischen Übersprechen gemäß Fig. 4b nur ein Übersprechen zwischen gleichartigen Farbsignalen auftritt. Zu diesem Zweck werden die Signale der aufeinanderfolgenden Halbbilder um den Betrag Fvor zeitlich vorverlegt, und zwar in der dargestellten Weise von Halbbild zu Halbbild abwechselnd um den Betrag H, O, O, H, H, O, O, H ... . In der Praxis erfolgt das Vorverlegen durch eine Verzögerung der anderen Signale oder durch Ausnutzung von ohnehin vorhandenen Speichern durch früheres Auslesen. Fig. 5a zeigt, daß nunmehr in nebeneinanderliegenden Spurabschnitten oder Zeilen stets gleichartige Farbsignale aufgezeichnet sind, wie durch die gleiche Pfeilrichtung in nebeneinanderliegenden Zeilen angedeutet. Fig. 5b zeigt, daß das symmetrische Übersprechen gemäß Fig. 4b beibehalten wird und daß zusätzlich jeweils drei gleichzeitig gelesene Zeilen, also z.B. 322, 12, 325, gleichartige Farbsignale enthalten. Die zeitliche Vorverlegung oder Verzögerung des Signals in Fig. 5 erfolgt dabei nur für die Farbsignale, während die Lage des Leuchtdichtesignals unverändert bleibt. Deshalb bleibt auch die Zuordnung der Zeilen mit ihren Ordnungsnummern gegenüber Fig. 4a unverändert. Das "Umsortieren" gemäß Fig. 4 zur Erzielung der Übersprechsymmetrie erfolgt also durch Verzögerung des gesamten aufgezeichneten Signals und die Ordnung der Farbsignale zur Erzielung gleichartiger Signale in parallelen Spuren lediglich durch Verzögerung der Farbsignale.

Alle die beschriebenen Verzögerungen bei der Aufnahme müssen bei der Wiedergabe wieder ausgeglichen werden, damit die Signale wieder ihre der Norm entsprechende Lage zueinander haben.

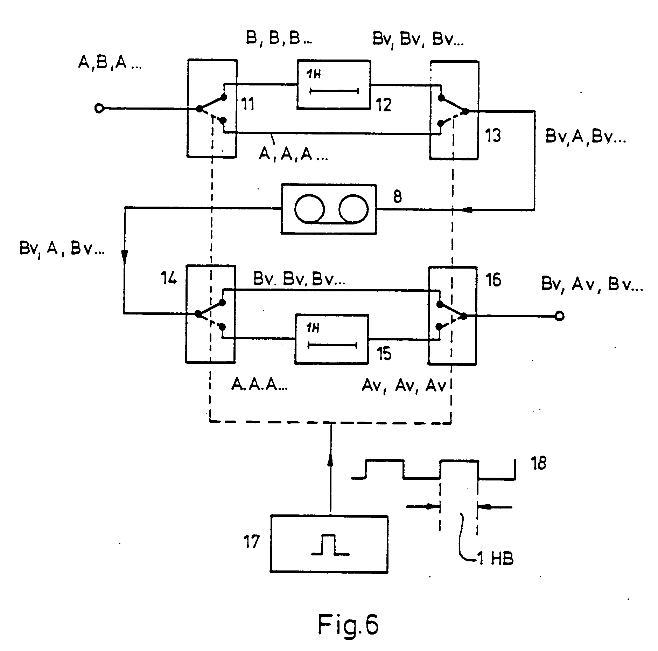

Fig. 6 zeigt eine Schaltung, die die Signalverzögerung entsprechend Fig. 4 und die entsprechenden Signalverzögerung bei der Wiedergabe ermöglicht. Die Signale der aufeinanderfolgenden Halbbilder A, B werden über den Schalter 11, die Verzögerungsstufe 12 für die Dauer einer Zeile H und den Schalter 13 dem Recorder 8 zugeführt. Die Schalter 11, 13 sind von dem Generator 17 durch die Schaltspannung 18 jeweils zu Beginn eines Halbbildes, und zwar kurz vor dem Vertikalsynchronimpuls, umgeschaltet. Der Schalter 11 sortiert zunächst die ungeradzahligen Halbbilder A und die geradzahligen Halbbilder B. Dadurch werden in der Stufe 12 entsprechend Fig. 4a nur die Signale der Halbbilder B um eine Zeilendauer H verzögert. Der Schalter 13 fügt die unverzögerten Signale der Halbbilder A und die verzögerten Signale der Halbbilder Bv wieder zu der gewünschten Folge gemäß Fig. 4a zusammen. Bei der Wiedergabe werden mit dem Schalter 14 wieder die Signale der Halbbilder A und Bv sortiert und mit der Verzögerungsstufe 15 mit der Verzögerungszeit der Zeilendauer H die Signale der Halbbilder A verzögert, um die Verzögerung in den Signalen der Halbbilder Bv auszugleichen. Dadurch entsteht am Ausgang des Umschalters 16 die Signalfolge Bv, Av, Bv ... . In dieser Signalfolge sind alle Signale verzögert, was für die Wiedergabe keine Bedeutung hat. Die ursprüngliche Zuordnung der Signale gemäß Fig. 3 ist dann wieder hergestellt.

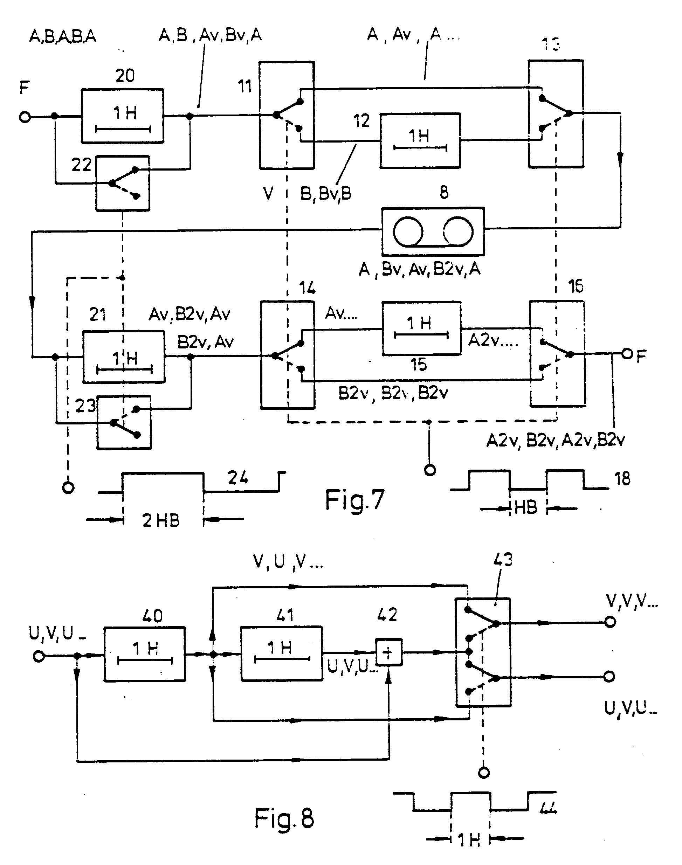

Fig. 7 zeigt eine Schaltung, mit der zusätzlich die Signalverzögerung gemäß Fig. 5 erreicht wird. Die Schaltung enthält zunächst wieder die Bauteile 11 - 16 von Fig. 6, die in der gleichen Weise wie in Fig. 6 durch die Schaltspannung 18 zu Beginn jedes Halbbildes betätigt werden. Zusätzlich sind vorgesehen die Zeilenverzögerungsstufen 20, 21 sowie die beiden Umschalter 22, 23. Die Umschalter 22, 23 werden durch die Schaltspannung 24 jeweils zu Beginn eines zweiten Halbbildes, also immer zu Beginn eines vollständigen Bildes betätigt und schalten die Verzögerungsstufen 20, 12 ein bzw. aus. Die Schaltung nach Fig. 7 bewirkt die Verzögerung gemäß Fig. 5a. Da diese Verzögerung für die Farbsignale erfolgen soll, wird die Schaltung nach Fig. 7 nur mit den Farbsignalen gespeist, angedeutet durch den Farbträger F. Durch die Schaltung werden alle durchlaufenden Signale um zwei Zeilen verzögert, so daß sie in ihrer zeitlichen Lage zueinander für die Wiedergabe wieder übereinstimmen. Die anhand von Fig. 3 - 5 beschriebene Umsortierung und Verzögerung der Signale ist gleichermaßen anwendbar für andere Signale wie z.B. PAL, SECAM, NTSC.

Fig. 8 zeigt eine Schaltung für die Wiedergabe, mit der aus den sequentiellen Signalen U, V wieder die simultanen Signale U, V gewonnen werden. Die Schaltung enthält zwei Zeilenverzögerungsstufen 40, 41, eine Addierstufe 42 und den zeilenfrequent betätigten Umschalter 43. Der Umschalter 43 wird durch die Schaltspannung 44 jeweils zur Beginn einer Zeile umgeschaltet. Die Verzögerungsstufe 41, z.B. ein CCD-Speicher, dient zur Wiederholung der Signale U, V in ihren Totzeiten. In der Addierstufe 42 wird jeweils einem Signal U oder V das entsprechende Signal U oder V aus zwei Zeilen vorher hinzugefügt. Diese Maßnahme dient zur einer Nachfilterung und zur Unterdrückung von Störungen im Bild, die bei bestimmten Bildanteilen aufgrund der sequentiellen Signalübertragung auftreten.

**Patentansprüche**

1. Verfahren zur Farbaufzeichnung mit einem Videorecorder, bei dem das Leuchtdichtesignal (Y) durch Frequenzmodulation eines Bildträgers (BT) und die Farbdifferenzsignale zeilensequentiell durch Amplitudenmodulation eines Farbträgers (F) in einem freien Frequenzbereich (1) unterhalb des Frequenzspektrums (10) des Bildträgers (BT) aufgezeichnet werden, **gekennzeichnet durch** folgende Merkmale:

jeweils ein Farbdifferenzsignal (U oder V) wird mit dem Farbträger (F) nach dem Einseitenbandverfahren aufgezeichnet;

die Farbdifferenzsignale (U, V) werden derart aufgezeichnet, daß jeweils jedes volle Bild mit demselben Farbdifferenzsignal beginnt;

das gesamte Signal jedes zweiten Halbbildes (B) wird bei der Aufnahme um ein derartiges ganzzahliges Vielfaches der Zeilendauer (H) verzögert, daß bei der Wiedergabe beim Lesen einer Zeile die durch Übersprechen gleichzeitig gelesenen beiden benachbarten Zeilen in dem auf dem Bildschirm geschriebenen Bild von der gelesenen Zeile den gleichen räumlichen Abstand aufweisen;

die Farbdifferenzsignale werden zusätzlich so verzögert, daß in nebeneinander liegenden Spurabschnitten stets gleichartige Farbdifferensingale aufgezeichnet werden;

die bei der Aufnahme vorgenommene Verzögerung der Signale wird bei der Wiedergabe durch eine komplementäre Verzögerung der bei der Aufnahme nicht verzögerten Signale ausgeglichen.

2. Verfahren nach Anspruch 1, **dadurch gekennzeichnet,** daß bei der Aufnahme das gesamte Signal in jedem zweiten Halbbild (B) und die Dauer einer Zeile verzögert wird (Fig. 4), und daß bei der Wiedergabe die Signale in den Halbbildern (A) um eine Zeilendauer verzögert werden, in denen sie bei der Aufnahme nicht verzögert wurden.

3. Verfahren nach Anspruch 1, **dadurch gekennzeichnet,** daß bei einem Signal (D2-MAC) bei der Aufnahme von Bild zu Bild abwechselnd die Farbdifferenzsignale des ersten bzw. zweiten Halbbildes (A bzw. B) um eine Zeilendauer verzögert werden (Fig. 5).

4. Verfahren nach Anspruch 2 oder 3, **dadurch gekennzeichnet,** daß das Leuchtdichtesignal (Y) bei der Aufnahme und/oder Wiedergabe gegenüber den Farbdifferenzsignalen um n Zeilen (n = 1, 2, 3) verzögert wird.

5. Verfahren nach Anspruch 1, **dadurch gekennzeichnet,** daß ein Farbsynchronsignal aufgezeichnet wird, mit dem bei der Wiedergabe der bei der Aufnahme unterdrückte Farbträger wiedergewonnen wird, und/oder daß das Farbsynchronsignal bei der Wiedergabe zur Regelung der Amplitude der Farbdifferenzsignale (ACC) dient.

**Claims**

1. Method of colour recording with a video recorder, in which the luminance signal (Y) is recorded by frequency modulation of a picture carrier (BT) and the colour difference signals recorded line-sequentially by amplitude modulation of a colour carrier (F) in a free frequency range (1) below the frequency spectrum (10) of the picture carrier (BT), characterised by the following features:

a colour difference signal (U or V) respectively is recorded with the colour carrier (F) according to the single sideband method;

the colour difference signals (U or V) are recorded in such a way that each picture begins with the same colour difference signal;

the entire signal of every second field (B) is delayed on recording by an integral multiple of the line duration (H) such that on playback when reading a line the two adjacent lines read at the same time due to crosstalk have the same spatial distance from the line which is being read in the image drawn on the screen;

the colour difference signals are in addition delayed such that always the same type of colour difference signals are recorded in track sections lying adjacent to one another;

the delay of signals undertaken on recording is balanced out on playback by a complementary delay of the signals not delayed on recording.

2. Method according to claim 1, characterised in that on recording, the whole signal in every second field (B) is delayed by the duration of a line (Fig.4), and that on playback the signals are delayed by the duration of a line in the fields (A) in which they were not delayed on recording.

3. Method according to claim 1, characterised in that, in a signal (D2-MAC) on recording from picture to picture, the colour difference signals of the first or second field (A or B) are delayed alternatively by the duration of a line (Fig.5).

4. Method according to claim 2 or 3, characterised in that the luminance signal (Y) is delayed on recording and/or playback by n lines (n = 1,2,3) with regard to the colour difference signals.

5. Method according to claim 1, characterised in that a colour synchronising burst is recorded, with which the colour carrier suppressed on recording is recovered on playback, and/or the colour synchronising burst is used on playback to regulate the amplitude of the colour difference signals, (ACC).

**Revendications**

1. Procédé pour l'enregistrement de couleurs avec un magnétoscope dans lequel le signal de luminance (Y) est enregistré par modulation de fréquence d'une porteuse image (BT) et les signaux de différence de couleur sont enregistrés de manière séquentielle ligne par ligne par modulation d'amplitude d'une porteuse couleur (F) dans une gamme de fréquences libre (1) au-dessous du spectre de fréquences (10) de la porteuse image (BT), la porteuse image (BT), **caractérisé par** les caractéristiques suivantes :

respectivement un signal de différence de couleur (U ou y) est enregistré avec la porteuse couleur (F) selon le procédé à bande latérale unique ;

les signaux de différence de couleur (U, V) sont enregistrés de manière telle que chaque image entière commence respectivement avec le même signal de différence de couleur ;

l'ensemble du signal de chaque deuxième trame (B) est retardé, lors de l'enregistrement, d'un multiple entier de la durée d'une ligne (H) tel que, lors de la reproduction, à la lecture d'une ligne, les deux lignes voisines lues simultanément par diaphonie présentent le même écart spatial par rapport à la ligne lue dans l'image enregistrée sur l'écran ;

les signaux de différence de couleur sont, de plus, retardés de telle manière que toujours des signaux de différence de couleur de même type sont enregistrés dans des sections de pistes situées l'une à côté de l'autre ;

le retard des signaux effectué lors de l'enregistrement est compensé, lors de la reproduction, par un retard complémentaire des signaux qui ne sont pas retardés lors de l'enregistrement.

2. Procédé selon la revendication 1, **caractérisé en ce** que, lors de l'enregistrement, l'ensemble du signal est retardé dans chaque seconde trame (B) de la durée d'une ligne (fig. 4) et qu'à la reproduction les signaux sont retardés de la durée d'une ligne dans les trames (A) dans lesquelles ils n'ont pas été retardés lors de l'enregistrement.

3. Procédé selon la revendication 1, **caractérisé en ce** que pour un signal (D2-MAC) lors de l'enregistrement les signaux de différence de couleur de la première ou de la seconde trame (A ou B) sont retardés de la durée d'une ligne en alternance d'image à image (figure 5).

4. Procédé selon la revendication 2 ou 3, **caractérisé en ce** que le signal de luminance (Y) est retardé par rapport aux signaux de différence de couleur de n lignes (n = 1, 2, 3) à l'enregistrement et/ou à la reproduction.

5. Procédé selon la revendication 1, **caractérisé en ce** qu'un signal de synchronisation couleur est enregistré avec lequel. à la reproduction, la porteuse couleur supprimée lors de l'enregistrement est récupérée et/ou que le signal de synchronisation couleur sert, à la reproduction, au réglage de l'amplitude des signaux de différence de couleur (ACC - réglage automatique de chrominance).

Fig.1

Fig.2

Fig. 3

Fig.4

EP 0 309 859 B1

HB Fvor

625 | 1 | 2 | 3 | 4 | 5 | 6 | 7 | 8 | 9 | 10 | 11 | 12 | 13 |  A  H

I

313 | 314 | 315 | 316 | 317 | 318 | 319 | 320 | 321 | 322 | 323 | 324 | 325 | 326 |  B  O

II

3 | 4 | 5 | 6 | 7 | 8 | 9 | 10 | 11 | 12 | 13 | 14 | 15 | 16 |  A  O

III

316 | 317 | 318 | 319 | 320 | 321 | 322 | 323 | 324 | 325 | 326 | 327 | 328 | 329 |  B  H

IV

6 | 7 | 8 | 9 | 10 | 11 | 12 | 13 | 14 | 15 | 16 | 17 | 18 |  A  H

I

319 | 320 | 321 | 322 | 323 | 324 | 325 | 326 | 327 | 328 | 329 | 330 |  B  O

II

9 | 10 | 11 | 12 | 13 | 14 | 15 | 16 | 17 | 18 |  A  O

322 | 323 | 324 | 325 | 326 | 327 | 328 | 329 | 330 |  B  H

a    Fig.5

| b (left) | b (right) |
|---|---|
| 10 | 1 |
| 322 | 313 |
| 11 | 2 |
| 323 | 314 |
| 12 | 3 |
| 324 | 315 |
| 13 | 4 |
| 325 | 316 |
| 14 | 5 |
| 326 | 317 |
| 15 | 6 |
| 327 | 318 |
| 16 | 7 |
| 328 | 319 |
| 17 | 8 |
| 329 | 320 |
| 18 | 9 |
| 330 | 321 |
| 19 | 10 |
| 331 | 322 |
| 20 | 11 |
| 332 | 323 |
| 21 | 12 |
| 333 | 324 |
| 22 | 13 |
| 334 | 325 |
| 23 | 14 |
| 335 | 326 |
| 24 | 15 |

b

Fig.6

Fig.7

Fig.8